# FASCICULE DE BREVET EUROPEEN

(11) **EP 2 785 978 B1**
(45) Date de publication et mention de la délivrance du brevet: **27.04.2016**
(21) Numéro de dépôt: 12806546.3
(22) Date de dépôt: 22.11.2012
(51) Int. Cl.: F01D 5/14, F01D 5/34, F04D 29/32

(54) **AUBE DE TURBOMACHINE NOTAMMENT POUR DISQUE AUBAGE MONOBLOC**
TURBINENMOTORSCHAUFEL, INSBESONDERE FÜR EINE EINTEILIGE SCHAUFELSCHEIBE
TURBINE ENGINE VANE, IN PARTICULAR FOR A ONE-PIECE BLADED DISK

(30) Priorité: 29.11.2011 FR 1160893
(43) Date de publication de la demande: 08.10.2014
(73) Titulaire: SNECMA, 75015 Paris (FR)
(72) Inventeur: PERROT, Vincent, Paul, Gabriel, F-77550 Moissy-Cramayel Cedex (FR); CELLIER, Damien, F-77550 Moissy-Cramayel Cedex (FR); DUFRESNE, Alicia, Lise, Julia, F-77550 Moissy-Cramayel Cedex (FR); PELLETRAU, Philippe, Pierre, Marcel, Marie, F-77550 Moissy-Cramayel Cedex (FR); RIOS, Jean-François, Antoine, Christian, F-77550 Moissy-Cramayel Cedex (FR); VILLAINES, Laurent, Christophe, Francis, F-77550 Moissy-Cramayel Cedex (FR)
(74) Mandataire: Boura, Olivier
(86) Numéro de dépôt international: PCT/FR2012/052695
(87) Numéro de publication internationale: WO 2013/079851

(56) Documents cités:
- EP-A1- 1 505 302
- EP-A2- 1 111 188
- EP-A2- 1 939 399
- EP-A2- 2 199 543
- US-A1- 2007 297 904
- US-A1- 2009 123 276
- US-A1- 2010 054 946
- SMITH L H ET AL: "Sweep and Dihedral Effects in Axial-Flow Turbomachinery", TRANSACTIONS OF THE AMERICAN SOCIETY OF MECHANICAL ENGINEERS,SERIES D: JOURNAL OF BASIC ENGINEERING, AMERICAN SOCIETY OF MECHANICAL ENGINEERS, NEW YORK, NY, US, vol. 85, no. 3, 1 septembre 1963 (1963-09-01), pages 401-416, XP000560640, ISSN: 0021-9223, DOI: 10.1115/1.3656623

## Description

### Arrière-plan de l'invention

La présente invention se rapporte au domaine général des disques aubagés monoblocs de turbomachine et vise plus particulièrement le profil des aubes qui composent de tels disques.

Un disque aubagé monobloc de turbomachine (également appelé DAM ou « blisk » en anglais) désigne un rotor dans lequel les aubes et le disque qui les porte sont usinés directement dans un même bloc homogène de métal de sorte à ne former qu'une seule et même pièce. De tels disques sont généralement utilisés pour former les différents étages du compresseur de la turbomachine, et notamment du compresseur haute-pression d'un turboréacteur aéronautique du type à double flux et double corps.

La conception des aubes de DAM doit satisfaire à des exigences à la fois de performance aérodynamique et de tenue mécanique dans un environnement particulier. Or, lorsque ces aubes présentent une hauteur radiale de pale relativement faible, des phénomènes aérodynamiques appelés écoulements secondaires de forte amplitude sont générés. Ces écoulements secondaires contribuent à réduire les performances aérodynamiques de l'aube. La tenue des écoulements aérodynamiques est également rendue délicate par la présence d'une veine d'écoulement dite plongeante, c'est-à-dire une veine inclinée vers l'axe de rotation du turboréacteur. Le document EP 1 505 302 décrit une aube de turbomachine.

### Objet et résumé de l'invention

Il est donc souhaitable de pouvoir disposer d'une aube de DAM dont le profil de pale permet de contrôler de façon optimale les écoulements secondaires et de tenir compte d'une implantation dans une veine dite plongeante.

A cet effet, il est prévu une aube de turbomachine, selon la revendication 1 comprenant une pale s'étendant axialement entre un bord d'attaque et un bord de fuite et radialement entre un pied et un sommet, et dans laquelle, conformément à l'invention, le bord d'attaque de la pale présente un angle de flèche qui est positif et continument croissant depuis le pied jusqu'à une première hauteur radiale de pale située entre 20% et 40% de la hauteur radiale totale de la pale mesurée depuis le pied vers le sommet, et continument décroissant depuis cette première hauteur radiale de pale jusqu'au sommet.

Un tel profil de pale permet notamment d'obtenir une répartition du débit de fluide qui favorise la zone de la pale proche du pied par rapport à la zone à mi-veine. De plus, le débit se trouve aspiré sur la partie supérieure de la veine. Il en résulte une optimisation de la répartition du débit de fluide sur toute la hauteur de la veine ce qui améliore le rendement aérodynamique de l'aube et participe à contrôler les écoulements secondaires.

L'angle de flèche du bord d'attaque de la pale devient négatif à partir d'une deuxième hauteur radiale de pale située entre 60% et 80% de la hauteur radiale totale de la pale.

De préférence également, l'angle de flèche du bord d'attaque de la pale est inférieur à -45° au sommet de la pale.

Selon une disposition avantageuse, le bord d'attaque de la pale présente un angle de dièdre qui est généralement croissant depuis le pied jusqu'au sommet. Cet angle de dièdre du bord d'attaque de la pale peut être compris entre une valeur minimale au niveau du pied comprise entre -25° et -5° et une valeur maximale au niveau du sommet comprise entre +5° et +25°. De préférence, il est compris entre -15° au niveau du pied et +15° au niveau du sommet.

Par ailleurs, l'angle de dièdre du bord d'attaque de la pale est avantageusement négatif entre le pied et la première hauteur radiale de pale et positif entre une troisième hauteur radiale de pale située entre 40% et 60% de la hauteur radiale totale de la pale et le sommet. La présence d'un tel angle de dièdre permet d'assurer une protection en incidence de la partie basse de la pale (on parle de fermeture du bord d'attaque) associée à une zone à contrainte statique acceptable.

La troisième hauteur radiale de pale est avantageusement située à 50% de la hauteur radiale totale de la pale. Ainsi, les efforts de l'aubage sur le fluide (et vice versa) sont orientés de façon optimale pour garantir une contrainte statique dans la pale acceptable et une répartition de rendement aérodynamique homogène.

La première hauteur radiale de pale est de préférence située à 30% de la hauteur radiale totale de la pale.

L'invention a aussi pour objet un disque aubagé monobloc de turbomachine comprenant une pluralité d'aubes telles que définies précédemment. L'invention a encore pour objet une turbomachine comprenant au moins un tel disque aubagé monobloc.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une vue partielle et en perspective d'un disque aubagé monobloc munie d'aubes selon l'invention ;
- la figure 2 montre une courbe représentative de l'angle de flèche du bord d'attaque de la pale d'une aube conforme à l'invention ; et
- la figure 3 montre une courbe représentative de l'angle de dièdre du bord d'attaque de la pale d'une aube conforme à l'invention.

### Description détaillée de l'invention

L'invention s'applique à toute aube de turbomachine.

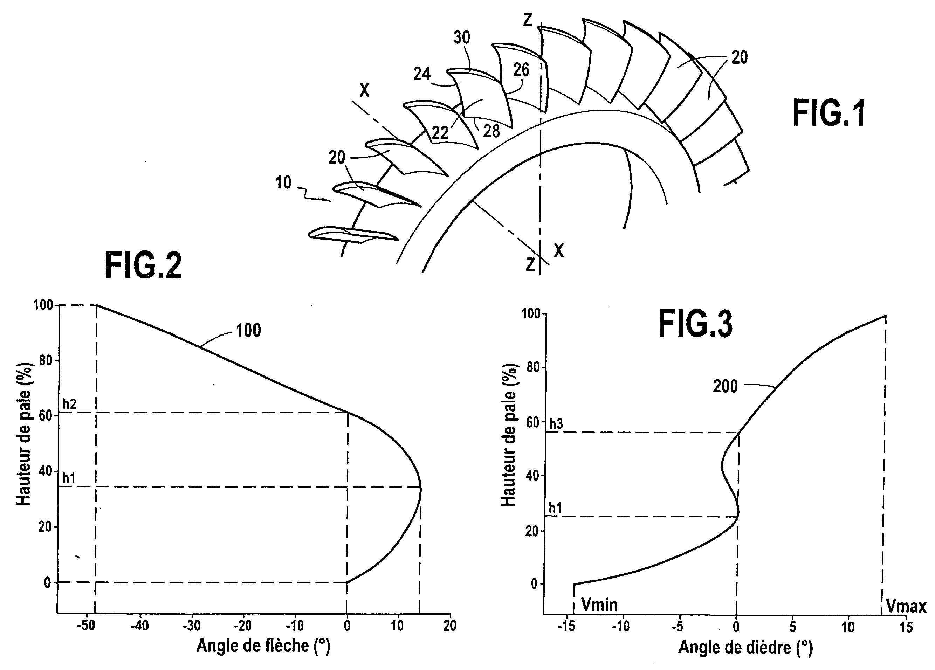

Elle concerne plus précisément mais non exclusivement les aubes d'un disque aubagé monobloc de turbomachine tel que les disques 10 des étages aval d'un compresseur haute-pression de turboréacteur comme celui représenté sur la figure 1. Les aubes 20 d'un tel disque sont de petite hauteur radiale de pale, par exemple de l'ordre de 25mm, et sont positionnés dans une veine d'écoulement dite plongeante, c'est-à-dire inclinée vers l'axe de rotation du turboréacteur.

Comme connu en soi, chaque aube 20 comprend une pale 22 qui s'étend axialement (c'est-à-dire selon l'axe longitudinal X-X du turboréacteur) entre un bord d'attaque 24 et un bord de fuite 26 et radialement (c'est-à-dire selon l'axe radial Z-Z perpendiculaire à l'axe longitudinal X-X) entre un pied 28 et un sommet 30.

Selon l'invention, le bord d'attaque 24 de la pale de l'aube présente un angle de flèche qui est positif et continument croissant depuis le pied 28 jusqu'à une première hauteur radiale de pale h₁ située entre 20% et 40% de la hauteur radiale totale de la pale mesurée depuis le pied vers le sommet, et continument décroissant depuis cette première hauteur radiale de pale h₁ jusqu'au sommet 30.

Par définition, la hauteur radiale minimale de pale égale 0% correspond au point d'intersection du bord d'attaque de la pale avec le disque aubagé délimitant à l'intérieur la veine d'écoulement du flux d'air traversant l'étage de compresseur. De même, la hauteur radiale maximale de pale égale à 100% correspond au point de la ligne du bord d'attaque le plus élevé radialement.

Par ailleurs, par angle de flèche (dénommé « sweep angle » en anglais), on entend l'angle aigu formé, à un point du bord d'attaque de l'aube, entre une tangente au bord d'attaque et une ligne perpendiculaire au vecteur de vitesse relative. Lorsque l'angle de flèche est positif, on dit que le bord d'attaque présente une courbure vers l'arrière (flèche arrière), tandis qu'un angle de flèche négatif indique que le bord d'attaque présente une courbure vers l'avant (flèche avant).

Une définition plus précise de l'angle de flèche est notamment donnée dans la publication de Leroy H. Smith et Hsuan Yeh intitulée « Sweep and Dihedral Effects in Axial-Flow Turbomachinery » (publiée au Journal of Basic Engineering de septembre 1963 - p.401).

L'angle de flèche du bord d'attaque de la pale de l'aube conformément à l'invention est illustré sur par la courbe 100 de la figure 2. Comme représenté par cette courbe 100, l'angle de flèche est positif (courbure vers l'arrière) et continument croissant depuis le pied (correspondant à une hauteur de pale de 0%) jusqu'à une première hauteur radiale de pale h₁ située entre 20% et 40% - et de préférence égale à 30% - de la hauteur radiale totale de la pale mesurée depuis le pied vers le sommet. L'angle de flèche est également continument décroissant depuis cette première hauteur radiale de pale h₁ jusqu'au sommet (correspondant à une hauteur de pale de 100%).

Par « continument », on entend ici que la croissance (respectivement décroissance) de l'angle de flèche n'est pas interrompue entre les deux hauteurs radiales de pale qui délimitent ces portions de bord d'attaque. En particulier, ces portions de bord d'attaque ne contiennent aucune croissance (respectivement décroissance) de l'angle de flèche.

L'angle de flèche du bord d'attaque de la pale devient négatif à partir d'une deuxième hauteur radiale de pale h₂ située entre 60% et 80% de la hauteur radiale totale de la pale (sur l'exemple illustré par la figure 2, h₂=60%).

De préférence également, l'angle de flèche du bord d'attaque de la pale est inférieur à -45° au sommet de la pale (sur l'exemple illustré par la figure 2, il est d'environ -49° à la hauteur radiale de pale de 100% correspondant au sommet de la pale).

Une telle loi d'angle de flèche pour le bord d'attaque de la pale avec ses particularités décrites ci-dessus participe principalement à la répartition du débit de fluide sur toute la hauteur de veine et à la stabilité aérodynamique à l'ouverture du jeu radial en sommet d'aube (qui a tendance à s'agrandir avec la vieillesse du moteur).

Par ailleurs, l'aube peut présenter des caractéristiques avantageuses supplémentaires qui sont données par une loi d'angle de dièdre du bord d'attaque de sa pale.

Par angle de dièdre du bord d'attaque (dénommé « dihedral angle » en anglais), on entend l'angle formé, à un point du bord d'attaque de l'aube, entre la tangente au bord d'attaque et un plan contenant l'axe de rotation de l'aube. Un angle de dièdre négatif indique que la tangente au point du bord d'attaque de l'aube est dirigée dans le sens de rotation de l'aube. Un angle de dièdre positif indique au contraire que la tangente au point du bord d'attaque de l'aube est dirigée dans le sens opposé de rotation de l'aube. Une définition plus précise de l'angle de dièdre est également donnée dans la publication de Leroy H. Smith et Hsuan Yeh citée ci-dessus.

L'angle de dièdre du bord d'attaque de la pale de l'aube selon l'invention est illustré sur par la courbe 200 de la figure 3. Comme représenté par cette courbe 200, cet angle de dièdre est généralement croissant depuis le pied jusqu'au sommet. Sur l'exemple de la figure 3, il passe ainsi d'une valeur de -15° au pied (correspondant à une hauteur radiale de pale de 0%) à une valeur de +13° au sommet (correspondant à une hauteur radiale de pale de 100%).

Contrairement à une croissance « continue », un angle de dièdre « généralement » croissant peut éventuellement être décroissant sur certaines portions du bord d'attaque comprises entre le pied et le sommet de pale.

De préférence, l'angle de dièdre du bord d'attaque de la pale est compris entre une valeur minimale Vₘᵢₙ au niveau du pied qui est comprise entre -25° et -5° et une valeur maximale Vₘₐₓ au niveau du sommet qui est comprise entre +5° et +25°. De préférence, l'angle de dièdre du bord d'attaque de la pale est compris entre -15° au niveau du pied et +15° au niveau du sommet.

De plus, l'angle de dièdre du bord d'attaque de la pale est avantageusement négatif entre le pied et la première hauteur radiale de pale h₁ située entre 20% et 40% - et de préférence égale à 30% - de la hauteur radiale totale de la pale. De même, il est de préférence positif entre une troisième hauteur radiale de pale h₃ située entre 40% et 60% - et de préférence égale à 50% - de la hauteur radiale totale de la pale et le sommet de la pale.

## Revendications

1. Aube (20) de turbomachine, comprenant une pale (22) s'étendant axialement entre un bord d'attaque (24) et un bord de fuite (26) et radialement entre un pied (28) et un sommet (30), **caractérisée en ce que** le bord d'attaque de la pale présente un angle de flèche qui est positif et continument croissant depuis le pied jusqu'à une première hauteur radiale de pale (h₁) située entre 20% et 40% de la hauteur radiale totale de la pale mesurée depuis le pied vers le sommet, qui est continument décroissant depuis cette première hauteur radiale de pale jusqu'au sommet, et qui devient négatif à partir d'une deuxième hauteur radiale de pale (h₂) située entre 60% et 80% de la hauteur radiale totale de la pale.

2. Aube selon la revendication 1, **caractérisée en ce que** l'angle de flèche du bord d'attaque de la pale est inférieur à -45° au sommet de la pale.

3. Aube selon l'une des revendications 1 et 2, **caractérisée en ce que** le bord d'attaque de la pale présente un angle de dièdre qui est généralement croissant depuis le pied jusqu'au sommet.

4. Aube selon la revendication 3, **caractérisée en ce que** l'angle de dièdre du bord d'attaque de la pale est compris entre une valeur minimale (Vₘᵢₙ) au niveau du pied comprise entre -25° et -5° et une valeur maximale (Vₘₐₓ) au niveau du sommet comprise entre +5° et +25°.

5. Aube selon la revendication 4, **caractérisée en ce que** la l'angle de dièdre du bord d'attaque de la pale est compris entre -15° au niveau du pied et +15° au niveau du sommet.

6. Aube selon l'une quelconque des revendications 3 à 5, **caractérisée en ce que** l'angle de dièdre du bord d'attaque de la pale est négatif entre le pied et la première hauteur radiale de pale et positif entre une troisième hauteur radiale de pale (h₃) située entre 40% et 60% de la hauteur radiale totale de la pale et le sommet.

7. Aube selon la revendication 6, **caractérisée en ce que** la troisième hauteur radiale de pale est située à 50% de la hauteur radiale totale de la pale.

8. Aube selon l'une quelconque des revendications 1 à 7, **caractérisée en ce que** la première hauteur radiale de pale est située à 30% de la hauteur radiale totale de la pale.

9. Disque aubagé monobloc de turbomachine, **caractérisé en ce qu'**il comprend une pluralité d'aubes selon l'une quelconque des revendications 1 à 8.

10. Turbomachine, **caractérisée en ce qu'**elle comprend au moins un disque aubagé monobloc selon la revendication 9.

## Patentansprüche

1. Turbomaschinenschaufel (20), umfassend ein Blatt (22), das sich zwischen einer Vorderkante (24) und einer Hinterkante (26) axial sowie zwischen einem Fuß (28) und einer Spitze (30) radial erstreckt, **dadurch gekennzeichnet, dass** die Vorderkante des Blattes einen Pfeilungswinkel aufweist, der von dem Fuß bis zu einer ersten radialen Blatthöhe (h₁), die zwischen 20 % und 40 % der vom Fuß zur Spitze gemessenen radialen Gesamthöhe des Blattes liegt, positiv und stetig zunehmend ist, der von dieser ersten radialen Blatthöhe bis zur Spitze stetig abnehmend ist und der ab einer zweiten radialen Blatthöhe (h₂), die zwischen 60 % und 80 % der radialen Gesamthöhe des Blattes liegt, negativ wird.

2. Schaufel nach Anspruch 1, **dadurch gekennzeichnet, dass** der Pfeilungswinkel der Vorderkante des Blattes geringer als -45°an de r Spitze des Blattes ist.

3. Schaufel nach einem der Ansprüche 1 und 2, **dadurch gekennzeichnet, dass** die Vorderkante des Blattes einen V-Winkel aufweist, der von dem Fuß bis zur Spitze im Allgemeinen zunehmend ist.

4. Schaufel nach Anspruch 3, **dadurch gekennzeichnet, dass** der V-Winkel der Vorderkante des Blattes zwischen einem minimalen Wert (Vₘᵢₙ) im Bereich des Fußes zwischen -25°und -5°und einem maximalen Wert (V ₘₐₓ) im Bereich der Spitze zwischen +5°und +25°liegt.

5. Schaufel nach Anspruch 4, **dadurch gekennzeichnet, dass** der V-Winkel der Vorderkante des Blattes zwischen -15°im Bereich de s Fußes und +15°im Bereich der Spitze beträgt.

6. Schaufel nach einem der Ansprüche 3 bis 5, **dadurch gekennzeichnet, dass** der V-Winkel der Vorderkante des Blattes zwischen dem Fuß und der ersten radialen Blatthöhe negativ ist und zwischen einer dritten radialen Blatthöhe (h₃), die zwischen 40 % und 60 % der radialen Gesamthöhe des Blattes liegt, und der Spitze positiv ist.

7. Schaufel nach Anspruch 6, **dadurch gekennzeichnet, dass** die dritte radiale Blatthöhe bei 50 % der radialen Gesamthöhe des Blattes liegt.

8. Schaufel nach einem der Ansprüche 1 bis 7, **dadurch gekennzeichnet, dass** die erste radiale Blatthöhe bei 30 % der radialen Gesamthöhe des Blattes liegt.

9. Einstückige Schaufelscheibe einer Turbomaschine, **dadurch gekennzeichnet, dass** sie eine Vielzahl von Schaufeln nach einem der Ansprüche 1 bis 8 umfasst.

10. Turbomaschine, **dadurch gekennzeichnet, dass** sie wenigstens eine einstückige Schaufelscheibe nach Anspruch 9 umfasst.

## Claims

1. A turbine engine blade (20) comprising an airfoil (22) extending axially between a leading edge (24) and a trailing edge (26) and extending radially between a root (28) and a tip (30), the blade being **characterized in that** the leading edge of the airfoil presents a sweep angle that is positive and that increases continuously from the root to a first radial height (h₁) of the airfoil situated in the range 20% to 40% of the total radial height of the airfoil as measured from the root to the tip, that decreases continuously from this first radial height of the airfoil to the tip, and that becomes negative as from a second radial height (h₂) of the airfoil situated in the range 60% to 80% of the total radial height of the airfoil.

2. A blade according to claim 1, **characterized in that** the sweep angle of the leading edge of the airfoil is less than -45° at the tip of the airfoil.

3. A blade according to claim 1 or claim 2, **characterized in that** the leading edge of the airfoil presents a dihedral angle that increases generally from the root to the tip.

4. A blade according to claim 3, **characterized in that** the dihedral angle of the leading edge of the airfoil lies between a minimum value (Vₘᵢₙ) at the root lying in the range -25° to -5°, and a maximum value (Vₘₐₓ) at the tip lying in the range +5° to +25°.

5. A blade according to claim 4, **characterized in that** the dihedral angle of the leading edge of the airfoil lies in the range -15° at the root to +15° at the tip.

6. A blade according to any one of claims 3 to 5, **characterized in that** the dihedral angle of the leading edge of the airfoil is negative between the root and the first radial height of the airfoil, and positive between a third radial height (h₃) of the airfoil situated in the range 40% to 60% of the total radial height of the airfoil and the tip.

7. A blade according to claim 6, **characterized in that** the third radial height of the airfoil is situated at 50% of the total radial height of the airfoil.

8. A blade according to any one of claims 1 to 7, **characterized in that** the first radial height of the airfoil is situated at 30% of the total radial height of the airfoil.

9. A one-piece bladed disk for a turbine engine, the disk being **characterized in that** it has a plurality of blades according to any one of claims 1 to 8.

10. A turbine engine, **characterized in that** it includes at least one one-piece bladed disk according to claim 9.
